(19) Europäisches Patentamt / European Patent Office / Office européen des brevets

(11) **EP 1 695 025 B1**

(12) **EUROPÄISCHE PATENTSCHRIFT**

(45) Veröffentlichungstag und Bekanntmachung des Hinweises auf die Patenterteilung:
**17.06.2015 Patentblatt 2015/25**

(51) Int Cl.:
**G01S 15/46** (2006.01)     **G01S 13/93** (2006.01)
**G01S 15/93** (2006.01)

(21) Anmeldenummer: **04820611.4**

(22) Anmeldetag: **02.12.2004**

(86) Internationale Anmeldenummer:
**PCT/EP2004/053242**

(87) Internationale Veröffentlichungsnummer:
**WO 2005/061985 (07.07.2005 Gazette 2005/27)**

(54) **VERFAHREN UND VORRICHTUNG ZUM BESTIMMEN DER POSITION VON MINDESTENS EINEM REFLEXIONSPUNKT AUF EINEM HINDERNIS**

METHOD AND DEVICE FOR DETERMINING THE POSITION OF AT LEAST ONE POINT OF REFLECTION ON AN OBSTACLE

PROCEDE ET DISPOSITIF DE DETERMINATION DE LA POSITION D'AU MOINS UN POINT DE REFLEXION SUR UN OBSTACLE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **19.12.2003 DE 10361315**

(43) Veröffentlichungstag der Anmeldung:
**30.08.2006 Patentblatt 2006/35**

(73) Patentinhaber: **Valeo Schalter und Sensoren GmbH**
**74321 Bietigheim-Bissingen (DE)**

(72) Erfinder:
• **GOTZIG, Heinrich**
**74081 Heilbronn (DE)**

• **ECKSTEIN, Oliver**
**71672 Marbach (DE)**
• **HENRY, Marion**
**44000 Nantes (FR)**
• **JUNG, Thomas**
**74199 Untergruppenbach (DE)**
• **JECKER, Nicolas**
**73728 Esslingen (DE)**

(56) Entgegenhaltungen:
**EP-A- 0 987 563          EP-A- 1 361 459**
**US-A1- 2003 128 153**

**Beschreibung**

Die Erfindung betrifft ein Verfahren und ein Computerprogramm zum Bestimmen der Position von mindestens einem Reflexionspunkt auf einem Hindernis in Bezug auf eine Entfernungsmessvorrichtung, wobei die Entfernungsmessvorrichtung eine Ultraschall-Entfernungsmessvorrichtung ist. Darüber hinaus betrifft die Erfindung einen Datenträger mit dem Computerprogramm sowie die Entfernungsmessvorrichtung selber zum Durchführen des Verfahrens.

Aus dem Stand der Technik sind Entfernungsmessvorrichtungen zum Bestimmen des Abstandes beziehungsweise der Position von einem Reflexionspunkt auf einem Hindernis in Bezug auf die Entfernungsmessvorrichtung grundsätzlich bekannt. Die bekannten Entfernungsmessvorrichtungen, sei es ultraschall-, infrarot- oder radargestützte Vorrichtungen, bestimmen die Position des Reflexionspunktes typischerweise in der Weise, dass sie zunächst ein Sendesignal auf das Hindernis mit dem Reflexionspunkt aussenden. Das Sendesignal wird dann in dem Reflexionspunkt vorzugsweise so reflektiert, dass zumindest ein Teil des reflektierten Signals als Empfangssignal auf die Entfernungsmessvorrichtung zurückreflektiert und dort empfangen werden kann. Durch Multiplizieren der ermittelten

Zeitdauer zwischen dem Aussenden des Sendesignals und dem Empfang des Empfangssignals mit der jeweiligen Ausbreitungsgeschwindigkeit des Sendesignals und einem Korrekturfaktor von 0,5 lässt sich dann auf die Entfernung zwischen der aktuellen Position der Entfernungsmessvorrichtung und der Position des Reflexionspunktes auf dem Hindernis zurückschließen.

Voraussetzung dafür, dass jedoch überhaupt ein Teil des Sendesignal von dem Reflexionspunkt auf die Entfernungsmessvorrichtung zurückreflektiert wird, ist, dass die Tangentialebene an dem Hindernis in dem Reflexionspunkt zumindest im Wesentlichen rechtwinklig zu der Ausbreitungsrichtung des Sendesignals im Reflexionspunkt ist.

Diese Voraussetzung ist typischerweise bei zumindest im Wesentlichen gradlinig begrenzten Hindernissen, wie zum Beispiel den Seitenbereichen von parkenden Fahrzeugen in der Regel erfüllt, wenn die Entfernungsmessvorrichtung zum Beispiel in den Seitenbereich eines PKW eingebaut ist, der parallel zu der Seitenfläche des Hindernisses, das heißt in konstantem Abstand an diesem vorbei fährt. Problematisch wird die Einhaltung dieser Voraussetzung jedoch dann, wenn krummlinig begrenzte Konturen mit Hilfe des beschriebenen Verfahrens erkannt werden sollen. Ein derartiges Problem stellt sich insbesondere dann, wenn die Position eines Konturverlaufs von zum Beispiel der vorderen Stoßstange eines parkenden Fahrzeugs als Hindernis von einem vorbeifahrenden Fahrzeug mit der eingebauten Entfernungsmessvorrichtung präzise ermittelt werden soll. Die dann gemessene Position der Kontur beziehungsweise Länge des Hindernisses im Verhältnis zu der tatsächlichen Konturposition beziehungsweise zu der tatsächlichen Länge des Hindernisses ist von der Abstrahlcharakteristik der Entfernungsmessvorrichtung sowie von deren Empfindlichkeit abhängig.

Traditionell werden für die besagte Positionsermittlung Entfernungsmessvorrichtungen mit in horizontaler Richtung breiter Abstrahlcharakteristik und empfindlicher Sensorik verwendet, um stabile Messungen realisieren zu können. Derartige Entfernungsmessvorrichtungen strahlen beispielsweise in horizontaler Richtung mit einem Winkel von ± 45° in Bezug auf eine Richtung senkrecht zur Fahrtrichtung des vorbeifahrenden Fahrzeugs, wenn die Entfernungsmessvorrichtung in dessen Seitenbereich eingebaut ist. Auf diese Weise wird traditionell sichergestellt, dass das Hindernis am Fahrbahnrand bereits sehr früh, das heißt typischerweise noch bevor das vorbeifahrende Fahrzeug auf Höhe des Hindernisses angelangt ist, erkannt wird und dass das Hindernis auf Grund einer in Rückwärtsrichtung gerichteten Strahlkomponente auch dann noch erfasst werden kann, wenn das vorbeifahrende Fahrzeug zumindest schon teilweise daran vorbeigefahren ist. Diese einerseits vorteilhafte Früherkennung und Nachbeobachtung hat jedoch den Nachteil, dass die Position der äußeren Kontur des Hindernisses/Kraftfahrzeugs, insbesondere im Bereich abgerundeter Ecken des Hindernisses nicht exakt ermittelbar ist; typischerweise liefert das beschriebene Messverfahren zu große Hindernislängen.

Aus der EP 1 36 1 459 A1 ist ein Fahrerassistenzsystem mit Koppelnavigation bekannt. Das System umfasst mehrere Abstandssensoren, die an unterschiedlichen Positionen des Fahrzeugs angeordnet sind. Durch Abstandsmessung mittels zweier Abstandssensoren kann nach dem Prinzip der Triangulation die Relativposition eines Hindernisses in Bezug auf das Fahrzeug bestimmt werden. Bei Unterschreiten eines Mindestabstandes zum Hindernis, bei dem keine ausreichend genaue Abstandsmessung zum Hindernis mehr möglich ist, wird die Hindernisposition basierend auf einer Weg- und Lenkwinkelmessung ermittelt.

Des Weiteren werden in der EP 0 987 563 A und der US 2003/128153 A1 jeweils Verfahren beschreiben, um die Relativposition eines Hindernisses durch Abstandsmessungen mit mehreren Sensoren nach dem Prinzip der Triangulation zu bestimmen.

Ausgehend von diesem Stand der Technik ist es die Aufgabe der Erfindung, ein Verfahren zum Bestimmen der Position von mindestens einem Reflexionspunkt auf einem Hindernis in Bezug auf eine Entfernungsmessvorrichtung, ein Computerprogramm und die Entfernungsmessvorrichtung selber sowie einen Datenträger mit dem Computerprogramm derart weiterzubilden, dass die Position des Reflexionspunktes auf der Oberfläche eines insbesondere krummlinig begrenzten Hindernisses präziser ermittelbar wird.

Diese Aufgabe wird durch das in Patentanspruch 1 beanspruchte Verfahren gelöst. Dieses Verfahren ist gekennzeichnet durch folgende Schritte: Vorbeifahrt am Hindernis zu einer zweiten Position der Entfernungsmessvorrichtung, Berechnen einer zweiten Entfernung des Reflexionspunktes in Bezug auf die zweite Position der Entfernungsmessvorrichtung analog zu der Berechnung der ersten Entfernung und Berechnen der Position des Reflexionspunktes mit Hilfe des Verfahrens der Triangulation aus einem ersten Wertepaar umfassend die erste Position der Entfernungsmessvorrichtung und die erste Entfernung, und einem zweiten Wertepaar, umfassend die zweite Position der Entfernungsmessvorrichtung und die zweite Entfernung, wobei der Abstand zwischen der ersten und der zweiten Position kleiner ist als die Summe der ersten und der zweiten Entfernung.

Vorteilhafterweise erfolgt die Berechnung der Position des Reflexionspunktes erfindungsgemäß nicht mehr nur auf Basis von einem, sondern auf Basis von zwei Wertepaaren. Mit einem Wertepaar alleine war bisher lediglich eine Aussage möglich, dass der Reflexionspunkt auf einem Kreis mit der dem Wertepaar zugeordneten Entfernung um die dem Wertepaar ebenfalls zugeordnete Position der Entfernungsmessvorrichtung liegen kann. Eine nähere Angabe zur Position des Reflexionspunktes auf dem Kreis ist mit dem ersten Wertepaar alleine nicht möglich. Genau dies wird jedoch durch die erfindungsgemäß vorgesehene zusätzliche Auswertung des zweiten Wertepaares ermöglicht, welches den Reflexionspunkt ebenfalls auf einem Kreis lokalisiert, allerdings auf einem Kreis mit der zweiten Position der Entfernungsmessvorrichtung als Mittelpunkt. Die letztendlich genaue Position des Reflexionspunktes kann dann mit Hilfe des Verfahrens der Triangulation aus diesen beiden Wertepaaren ermittelt werden, wenn sich die durch die beiden Wertepaare repräsentierten Kreise zumindest in einem Punkt schneiden. Dieser Schnittpunkt repräsentiert dann die genaue x-, y- Position des Reflexionspunktes.

Vorteilhafterweise ist es bei dem erfindungsgemäßen Verfahren nicht zwingend notwendig, immer sowohl die x- wie auch die y-Position des Reflexionspunktes zu ermitteln. Vielmehr ermöglicht das erfindungsgemäße Verfahren eine separate Berechnung der x- oder y-Koordinate der Position des Reflexionspunktes. Eine derartige Berechnung von lediglich einer der Koordinaten der Position des Reflexionspunktes ermöglicht eine Einsparung von Rechenzeit und kann deshalb insbesondere aus Kosten- und/oder Zeitgründen sinnvoll sein.

Die Berechnung der x-Koordinate kann unabhängig von der y-Koordinate erfolgen und umgekehrt.

Die Positionsberechnung nach dem erfindungsgemäßen Verfahren kann dadurch verbessert werden, dass sichergestellt wird, dass die für die Berechnung der Position verwendeten Wertepaare aus einer Vielzahl von Wertepaaren ausgewählt werden, die einen einheitlichen Trend beziehungsweise eine einheitliche Kontur repräsentieren und keine aus diesem Trend herausfallenden Wertepaare aufweist, beziehungsweise vorher geglättet wurde.

Wenn mittels des erfindungsgemäßen Verfahrens die Positionen für eine Vielzahl von Reflexionspunkten ermittelt werden, wobei die Vielzahl der Positionen beziehungsweise Reflexionspunkte die Kontur des Hindernisses repräsentiert, ist es vorteilhaft, wenn die berechneten x- und/oder y-Koordinaten der einzelnen Reflexionspunkte dahingehend überprüft werden, dass die betragliche Differenz zwischen ihnen und den x- beziehungsweise r-Koordinaten der ersten oder zweiten Positionen der Entfernungsmessvorrichtung kleiner als vorgegebene Schwellenwerte sind.

Die für die erfindungsgemäße Berechnung von Positionen verschiedener Reflexionspunkte jeweils erforderliche Auswahl von Wertepaaren aus einer Vielzahl von Wertepaaren kann grundsätzlich beliebig erfolgen; das heißt, es können grundsätzlich zwei beliebige Wertepaare aus der Vielzahl für die Berechnung der Position eines Reflexionspunktes herangezogen werden.

Die oben genannte Aufgabe der Erfindung wird weiterhin durch ein Computerprogramm und eine Entfernungsmessvorrichtung zum Durchführen des erfindungsgemäßen Verfahrens sowie durch einen Datenträger mit dem Computerprogramm gelöst. Die Vorteile dieser Lösungen entsprechen den oben mit Bezug auf das beanspruchte Verfahren genannten Vorteile.

Der Beschreibung sind insgesamt sechs Figuren beigefügt, wobei

Figur 1      das erfindungsgemäße Verfahren;

Figur 2      eine Veranschaulichung des erfindungsgemäßen Verfahrens für einen Reflexionspunkt;

Figur 3      eine Veranschaulichung des erfindungsgemäßen Verfahrens für mehrere Reflexionspunkte;

Figur 4a     ein Hindernis 200 und einen berechneten Konturverlauf für das Hindernis ohne Anwendung des erfindungsgemäßen Verfahrens;

Figur 4b     die mit Hilfe des erfindungsgemäßen Verfahren ermittelte Kontur des Hindernisses, wenn alleine die x-Komponente der die Kontur repräsentierenden Reflexionspunkte berechnet wird;

Figur 4c     den erfindungsgemäß ermittelten Konturverlauf wenn sowohl die x- wie auch die y-Koordinate der die Kontur repräsentierenden Reflexionspunkte ermittelt wird;

Figur 5      eine Veranschaulichung des erfindungsgemäßen Verfahrens bei einem Konturverlauf eines Hindernisses parallel zu einer Bewegungsrichtung der Entfernungsmessvorrichtung während eines Messvorganges;

Figur 6a die Verteilung von Positionen einer Vielzahl von Reflexionspunkten bei Ermittlung des Verlaufs der Kontur eines Hindernisses gemäß der Erfindung; und

Figur 6b die Rekonstruktion des Konturverlaufs des Hindernisses auf Grundlage der in Figur 6a gezeigten Verteilung der berechneten Positionen für die Vielzahl von Reflexionspunkten;

veranschaulicht.

Das erfindungsgemäße Verfahren wird nachfolgend unter Bezugnahme auf die genannten Figuren detailliert beschrieben.

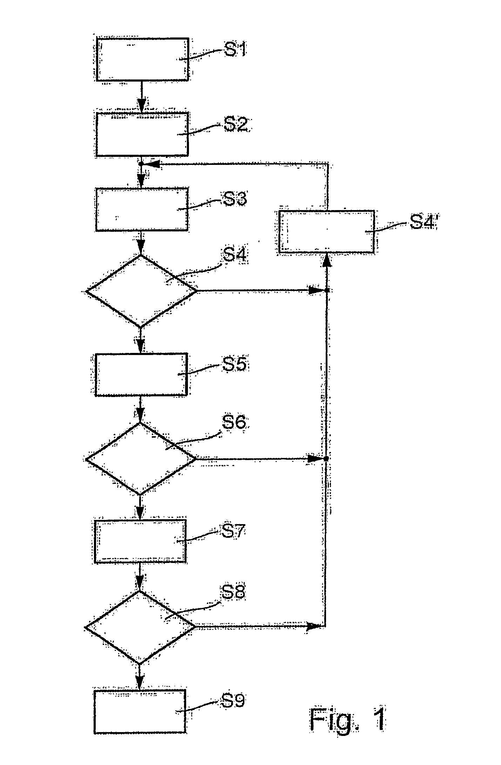

Figur 1 veranschaulicht das erfindungsgemäße Verfahren zum Berechnen möglichst präziser Positionen x, y einzelner Reflexionspunkte $R_{1-2}$ auf der Oberfläche eines Hindernisses 200, insbesondere eines am Straßenrand parkenden Fahrzeugs in Bezug auf eine Entfernungsmessvorrichtung 100, eingebaut in den Seitenbereich eines an dem Hindernis vorbeifahrenden anderen Fahrzeugs. Bei der Entfernungsmessvorrichtung 100 handelt es sich um eine Ultraschall-Entfernungsmessvorrichtung.

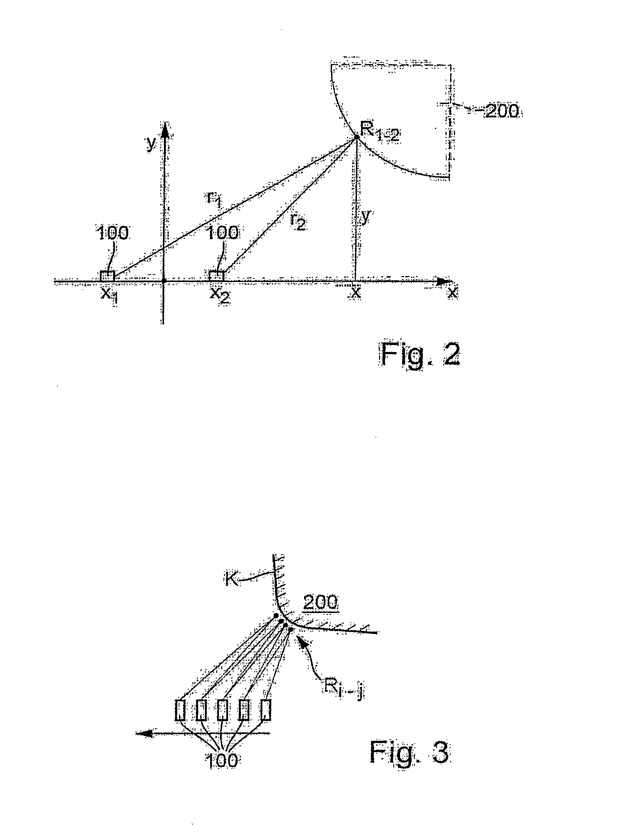

Zum Ermitteln des genauen Konturverlaufs des Hindernisses 200 sieht Verfahrensschritt S1 des erfindungsgemäßen Verfahrens zunächst vor, den zu vermessenden Konturbereich von einer Vielzahl I unterschiedlicher Positionen $x_i$ mit i=1... I aus zu vermessen. Dazu wird angenommen, dass die Entfernungsmessvorrichtung 100 jeweils von unterschiedlichen Positionen $x_1$, $x_2$ in Bezug auf das Hindernis 200, wie dies in Figur 2 dargestellt ist, positioniert ist. Im Rahmen dieser Beschreibung werden die unterschiedlichen Positionen, die die Entfernungsmessvorrichtung 100 zur Durchführung des erfindungsgemäßen Verfahrens in Bezug auf das Hindernis 200 jeweils einnimmt, vereinfachend nur mit ihrer x-Komponente $x_i$ mit i = 1 ... I bezeichnet; die zugehörigen y- und z-Positionen werden hier der Einfachheit halber ignoriert; sie können jedoch in der Praxis als weitere Komponenten eines Ortsvektors durchaus gegeben sein.

In jeder der genannten Positionen $x_i$ sendet die Entfernungsmessvorrichtung 100 ein Sendesignal in Richtung auf das zu vermessende Hindernis 200 und ermittelt die Zeitdauer zwischen dem Aussenden des Sendesignals und dem Empfang eines Empfangssignals als Teil des an dem Hindernis 200 reflektierten Sendesignals. Mit Hilfe der als bekannt vorausgesetzten Ausbreitungsgeschwindigkeit des Sendesignals lässt sich dann in Kenntnis der jeweils gemessenen Zeitdauer die jeweilige Entfernung $r_i$ zwischen der jeweiligen Position $x_i$ der Entfernungsmessvorrichtung 100 und der Oberfläche des Hindernisses 200 ermitteln. Eine Position $x_i$ der Entfernungsmessvorrichtung 100 und die jeweils von ihr aus gemessene individuelle Entfernung $r_i$ zu dem Hindernis 200 werden erfindungsgemäß jeweils als ein Wertepaar $x_i$, $r_i$ bezeichnet. Anschaulich gesprochen repräsentiert jedes dieser Wertepaare einen Kreis mit dem Radius $r_i$ um den Mittelpunkt xi auf dem der gesuchte zugehörige Reflexionspunkt auf der Oberfläche des Hindernisses 200 liegen kann.

Nach der Ermittlung einer Vielzahl derartiger Wertepaare gemäß Verfahrensschritt S1, zum Beispiel während einer Vorbeifahrt des anderen Fahrzeugs an dem Hindernis 200 beziehungsweise parkenden Fahrzeug in Pfeilrichtung gemäß Figur 2 oder Figur 3, werden die ermittelten Wertepaare $x_i$, $r_i$ dahingehend überprüft, ob sie zusammen einen harmonischen beziehungsweise stetigen Konturverlauf repräsentieren würden. Dies erfolgt in der Weise, dass diese Wertepaare erforderlichenfalls insofern geglättet werden, als dass Wertepaare die von der Größe ihrer Werte her offensichtlich nicht zu der großen Mehrzahl der übrigen ermittelten Werte passen, ignoriert beziehungsweise verworfen werden.

Verfahrensschritt S3 werden dann aus der erforderlichenfalls geglätteten Vielzahl von Wertepaaren jeweils zwei Wertepaare ausgewählt, um daraus später im Verfahrensschritt S5 die Position x, y eines Reflexionspunktes auf dem Hindernis 200 zu berechnen. Grundsätzlich können beliebige Wertepaare aus der Vielzahl von Wertepaaren paarweise kombiniert werden. Vorzugsweise werden jedoch bezüglich ihrer jeweiligen Position der Entfernungsmessvorrichtung benachbarte Wertepaare kombiniert. Alternativ dazu besteht jedoch beispielsweise auch die Möglichkeit, nicht unmittelbar benachbarte Wertepaare, sondern Wertepaare auf Basis einer übernächsten x-Position, also beispielsweise die Wertepaare $(x_1, r_1)$ ; $(x_3, r_3)$ ; $(x_3, r_3)$ ; $(x_5, r_5)$ etc. miteinander zu kombinieren. Einzelne Wertepaare können auch mehrfach für unterschiedliche Paar-Kombinationen ausgewählt werden.

Einzige zwingende Voraussetzung für die Auswahl eines geeigneten Paares von Wertepaaren für die Berechnung der Position des Reflexionspunktes $R_{1-2}$ gemäß der Erfindung ist, dass sich die durch die beiden Wertepaare repräsentierten Kreise schneiden. Dazu wird in Verfahrensschritt S4 überprüft, ob der Abstand zwischen den Positionen $x_1$, $x_2$ der Entfernungsmessvorrichtung bei den beiden im Verfahrensschritt S3 ausgewählten Wertepaaren kleiner ist als die Summe ihrer zugehörigen Entfernung $r_1$, $r_2$. Sollte diese Bedingung nicht erfüllt sein, so kann das erfindungsgemäße Verfahren nicht angewendet werden und es muss dann ein neues Paar von Wertepaaren gemäß Verfahrensschritt S3 ermittelt werden; zu diesem Zweck verzweigt dann das erfindungsgemäße Verfahren von Verfahrensschritt S4 erneut auf den Beginn von Verfahrensschritt S3, wobei jedoch zuvor in Verfahrensschritt S4', sichergestellt wird, dass die bei den vorherigen Durchläufen des Verfahrensschrittes S3 ausgewählten Paare von Wertepaaren bei dem erneuten Durchlauf von Verfahrensschritt S3 nicht erneut ausgewählt werden dürfen.

Wenn dann schließlich in den Verfahrensschritten S3 und S4 zwei geeignete Wertepaare $x_1$, $r_1$; $x_2$, $r_2$ ausgewählt wurden, werden diese im Verfahrensschritt S5 dazu verwendet, um mit Hilfe des Verfahrens der Triangulation die x-Koordinate und/oder die y-Koordinate der Position eines diesem Wertepaar zugeordneten Reflexionspunktes $R_{1-2}$ zu berechnen.

Dabei berechnet sich die x-Koordinate gemäß folgender Gleichung (1):

$$x = \frac{r_2^2 - r_1^2 - x_2^2 + x_1^2}{2 * (x_1 - x_2)} \qquad (1)$$

wobei

$x_1$    die erste Position der Entfernungsmessvorrichtung 100;
$x_2$    die zweite Position der Entfernungsmessvorrichtung 100;
$r_1$    die erste Entfernung des Reflexionspunktes $R_{1-2}$; und
$r_2$    die zweite Entfernung des Reflexionspunktes $R_{1-2}$;

repräsentiert.

Die y-Komponente der Position des Reflexionspunktes $R_{1-2}$ berechnet sich gemäß folgender Gleichung (2):

$$y = \sqrt{r_2^2 - (x - x_2)^2} \qquad (2)$$

wobei

$x$    die x-Koordinate der Position $R_{1-2}$;
$x_2$    die zweite Position der Entfernungsmessvorrichtung 100; und
$r_2$    die zweite Entfernung des Reflexionspunktes

repräsentiert.

Die auf diese Weise berechnete Position des Reflexionspunktes $R_{1-2}$ repräsentiert umso wahrscheinlicher einen tatsächlichen Punkt auf der Oberfläche des Hindernisses 200, je größer der Betrag der Differenz zwischen der x-Koordinate der Position des Reflexionspunktes und der x-Koordinate der ersten oder der zweiten Position $x_1$, $x_2$ der Entfernungsmessvorrichtung 100 ist. Dieser Betrag der besagten Differenz sollte größer als ein vorgegebener $\Delta$x-Schwellenwerte sein, damit die entsprechende x-Koordinate für die Position des Reflexionspunktes $R_{1-2}$ nicht verworfen werden muss. Neben dieser Betrachtung werden im Verfahrensschritt S6 analoge Schwellenwertvergleiche für die Differenzen $|x_2-x|$ ; $|y_1-y_{1-2}|$ ; und $|y_2-y_{1-2}|$. Sollte die Überprüfung gemäß Verfahrensschritt S6 ergeben, dass zumindest eine dieser Differenzen einen jeweils ihr zugeordneten Schwellenwert nicht übersteigt, so wird die entsprechende in Verfahrensschritt S5 ermittelte Koordinate x und/oder y verworfen. Das Verfahren verzweigt dann über Verfahrensschritt S4' wieder auf den Beginn von Verfahrensschritt S3.

Wenn die Überprüfung in Verfahrensschritt S6 jedoch ergeben sollte, dass die geprüften Beträge alle größer als die ihnen individuell zugeordneten Schwellenwerte sind, wird die in Verfahrensschritt S5 berechnete Position x,y des Reflexionspunktes $R_{1-2}$ freigegeben und in Verfahrensschritt S7 zwischengespeichert. In Verfahrensschritt S8 erfolgt dann eine Abfrage, ob für eine in Verfahrensschritt S9 geplante Berechnung des tatsächlichen Konturverlaufs des Hindernisses 200 bereits ausreichend viele Positionen von Reflexionspunkten auf dem Hindernis 200 berechnet wurden. Wenn dem so ist, verzweigt das Verfahren von Verfahrensschritt S8 nach S9. Wenn nicht, verzweigt das Verfahren über Verfahrensschritt S4', wieder auf den Beginn von Verfahrensschritt S3, wo weitere Paare von Wertepaaren für neue Positionsberechnungen von Reflexionspunkten ausgewählt werden.

Die durch die wiederholte Anwendung von insbesondere Verfahrensschritt S5 generierte Mehrzahl von Positionen für unterschiedliche Reflexionspunkte $R_{i-j}$ mit i=...I und j=1...J repräsentieren letztlich in ihrer geometrischen Anordnung zueinander den gesuchten Verlauf der Kontur K des Hindernisses 200.

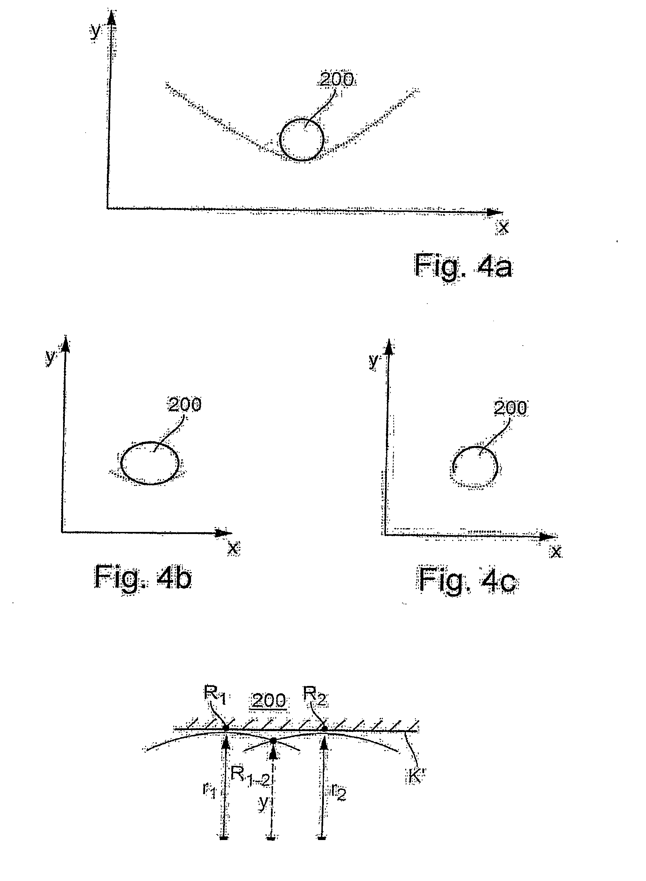

In Figur 4 ist dieser Zusammenhang nochmals für ein Hindernis 200 mit kreisförmigem Querschnitt dargestellt. Es wird angenommen, dass ein Fahrzeug in x-Richtung an dem Hindernis 200 vorbeifährt, wobei das Fahrzeug in seinem Seitenbereich die erfindungsgemäße Entfernungsvorrichtung 100 eingebaut hat. Wenn diese Entfernungsmessvorrichtung 100 ohne das erfindungsgemäße Verfahren arbeiten würde, würde sich der in Figur 4a eingezeichnete punktierte Konturverlauf aus den gemäß Verfahrensschritt S5 berechneten x- und y-Koordinaten ergeben, wobei jeder Punkt einen anders positionierten Reflexionspunkt repräsentiert.

Bei dem erfindungsgemäßen Verfahren hat man grundsätzlich die Wahl, welche der kartesischen Koordinaten x, y für die Positionen der Reflexionspunkte $R_{i-j}$ gemäß den Gleichungen (1) oder (2) berechnet werden sollen und welche nicht. Ist es für einen bestimmten Anwendungsfall lediglich erforderlich, eine Begrenzung des Hindernisses 200 in x-Richtung präzise zu ermitteln, so ist es in der Regel ausreichend, lediglich mit der Formel (1) zu arbeiten. Auf diese Weise wird erreicht, dass die punktierte Linie in Figur 4b in x-Richtung im Wesentlichen auf die Breite des Hindernisses 200 begrenzt wird.

Allerdings repräsentiert die punktierte Linie in Figur 4b den tatsächlichen Konturverlauf des Hindernisses 200 nur in einem relativ kleinen Bereich. Eine verbesserte Konturermittlung in Tiefenrichtung wird gemäß Figur 4c dadurch erreicht, dass zusätzlich auch die Gleichung (2), das heißt die y-Komponente mit ausgewertet wird. Insbesondere Figur 4c veranschaulicht, dass das erfindungsgemäße Verfahren zur Ermittlung des Konturverlaufs von konvex geformten Hindernissen 200 eingesetzt wird.

Wenngleich das Verfahren theoretisch auch zur Ermittlung des Konturverlaufs von gradlinig begrenzten Hindernissen 200, wobei die Begrenzung parallel zur Bewegungsrichtung x der Entfernungsmessvorrichtung 100 liegt, verwendet werden kann, so ist seine Anwendung in diesen Fällen jedoch nicht sinnvoll, wie dies in Figur 5 veranschaulicht ist. Genauer gesagt ist in Figur 5 zu erkennen, dass jeweils ein Wertepaar $x_1$, $r_1$; $x_2$, $r_2$ bereits einen recht genauen Rückschluss auf die Position der entsprechenden Reflexionspunkte $R_1$, $R_2$ auf der Oberfläche des gradlinig begrenzten Hindernisses 200 und damit auf dessen Konturverlauf K' zu lassen. Die Anwendung des erfindungsgemäßen Verfahrens führt in diesem Fall zu der Berechnung einer Entfernung beziehungsweise y-Komponente die durch den Schnittpunkt $R_{1-2}$ der durch die beiden Wertepaare $x_1$, $r_1$; $x_2$, $r_2$ repräsentierten Kreise gebildet wird. Der auf diese Weise ermittelte Abstand y ist jedoch deutlich kleiner als die beiden Entfernungen $r_1$ oder $r_2$ und ist deshalb kein guter Repräsentant für die tatsächliche Position eines zugeordneten Reflexionspunktes auf der Oberfläche des Hindernisses 200.

Figur 5 veranschaulicht jedoch einen anderen Sachverhalt der allgemein für das erfindungsgemäße Verfahren gilt, unabhängig davon, ob ein krummlinig oder ein gradlinig begrenztes Hindernis 200 erfasst werden soll. Dieser Sachverhalt besteht darin, dass der Koordinatenursprung für die erfindungsgemäß berechnete x, y Position des Reflexionspunktes $R_{1-2}$ auf der Hälfte des Abstandes zwischen den Positionen $x_1$ und $x_2$ liegt.

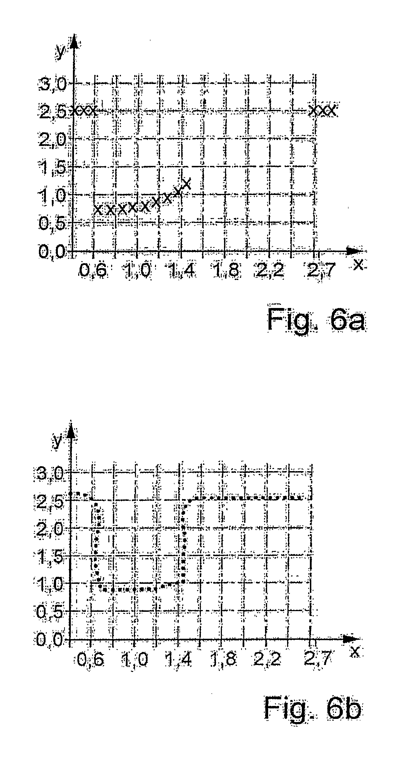

In Figur 6 ist schließlich noch ein Beispiel von Messwerten für eine reale Hindernisvermessung dargestellt. Konkret sind in Figur 6a die nach dem erfindungsgemäßen Verfahren berechneten beziehungsweise korrigierten Positionen für eine Vielzahl von unterschiedlichen Reflexionspunkten eingezeichnet, wobei jede dieser Positionen durch ein x gekennzeichnet ist. Diese Positionen wurden auf Basis von Wertepaaren ermittelt, die bei einer Vorbeibewegung der Erfindungsmessvorrichtung 100 in x-Richtung an dem Hindernis (in Figur 6a nicht gezeigt) gemessen wurden. Aus den in Figur 6a dargestellten Positionen für die Reflexionspunkte kann dann in Verfahrensschritt S9 gemäß Figur 1 der in Figur 6b dargestellte Konturverlauf des Hindernisses 200 realitätsnah rekonstruiert werden.

Das erfindungsgemäße Verfahren wird vorzugsweise in Form eines Computerprogramms realisiert. Das Computerprogramm kann gegebenenfalls zusammen mit weiteren Computerprogrammen auf einem Datenträger abgespeichert sein. Bei dem Datenträger kann es sich um eine Diskette, eine Compact-Disc, einen sogenannten Flash-Memory oder dergleichen handeln. Das auf dem Datenträger abgespeicherte Computerprogramm kann dann als Produkt an einen Kunden übertragen oder verkauft werden. Alternativ zu einer Übertragung per Datenträger kann das Computerprogramm auch ohne die Zuhilfenahme des Datenträgers über ein elektronisches Kommunikationsnetzwerk, insbesondere das Internet an den Kunden übertragen werden.


**Patentansprüche**

1.  Verfahren zum Bestimmen der Position (x,y) von mindestens einem Reflexionspunkt ($R_{1-2}$) auf der Oberfläche eines konvex geformten Hindernisses (200) mittels einer in den Seitenbereich eines Fahrzeugs eingebauten Entfernungsmessvorrichtung (100), wobei die Entfernungsmessvorrichtung (100) eine Ultraschall-Entfernungsmessvorrichtung ist, umfassend die Schritte:

    - Berechnen einer ersten Entfernung ($r_1$) zwischen dem Reflexionspunkt und einer ersten Position ($x_1$) der Entfernungsmessvorrichtung (100) aus einer Zeitdauer zwischen einem Aussenden eines ersten Sendesignals von der Entfernungsmessvorrichtung an der Position ($x_1$) auf das Hindernis und einem Empfang eines Empfangssignals als Teil des an dem Hindernis (200) reflektierten Sendesignals;
    **gekennzeichnet durch**
    - **Vorbeifahrt am Hindernis zu einer zweiten Position** ($x_2$) **der Entfernungsmessvorrichtung (100),**
    - Berechnen einer zweiten Entfernung ($r_2$) des Reflexionspunktes in Bezug auf die zweite Position ($x_2$) der Entfernungsmessvorrichtung (100) analog zu der Berechnung der ersten Entfernung ($r_1$); und
    - Berechnen der Position (x,y) des Reflexionspunktes ($R_{1-2}$) mit Hilfe des Verfahrens der Triangulation aus

einem ersten Wertepaar $(x_1, r_1)$, umfassend die erste Position $(x_1)$ der Entfernungsmessvorrichtung und die erste Entfernung $(r_1)$, und einem zweiten Wertepaar $(x_2, r_2)$, umfassend die zweite Position $(x_2)$ der Entfernungsmessvorrichtung und die zweite Entfernung $(r_2)$, wobei der Abstand zwischen der ersten und der zweiten Position $(x_1, x_2)$ kleiner ist als die Summe der ersten und der zweiten Entfernung $(r_1, r_2)$.

2. Verfahren nach Anspruch 1, **dadurch gekennzeichnet, dass** sich die x-Koordinate $(x)$ der Position des Reflexionspunktes $(R_{1-2})$ gemäß der folgenden Gleichung (1) berechnet:

$$x = \frac{r_2^2 - r_1^2 - x_2^2 + x_1^2}{2 * (x_1 - x_2)} \qquad (1)$$

wobei

$x_1$ die erste Position der Entfernungsmessvorrichtung (100);
$x_2$ die zweite Position der Entfernungsmessvorrichtung (100);
$r_1$ die erste Entfernung des Reflexionspunktes $(R_{1-2})$; und
$r_2$ die zweite Entfernung des Reflexionspunktes $(R_{1-2})$ repräsentiert.

3. Verfahren nach Anspruch 2, **dadurch gekennzeichnet, dass** die berechnete x-Koordinate $(x)$ der Position des Reflexionspunktes $(R_{1-2})$ verworfen wird, wenn der Betrag der Differenz zwischen der x-Koordinate $(x)$ der Position des Reflexionspunktes $(R_{1-2})$ und der x-Koordinate der ersten oder zweiten Position $(x_1, x_2)$ der Entfernungsmessvorrichtung (100) kleiner als ein vorgegebener $\Delta x$-Schwellenwert ist.

4. Verfahren nach einem der vorangegangenen Ansprüche, **dadurch gekennzeichnet, dass** sich die y-Koordinate $(y)$ der Position des Reflexionspunktes gemäß der folgenden Gleichung (2) berechnet:

$$y = \sqrt{r_2^2 - (x - x_2)^2} \qquad (2)$$

wobei

$x$ die x-Koordinate der Position des Reflexionspunktes $(R_{1-2})$ ;
$x_2$ die zweite Position der Entfernungsmessvorrichtung; und
$r_2$ die zweite Entfernung des Reflexionspunktes repräsentiert.

5. Verfahren nach Anspruch 4, **dadurch gekennzeichnet, dass** die berechnete y-Koordinate $(y)$ der Position des Reflexionspunktes $(R_{1-2})$ verworfen wird, wenn der Betrag der Differenz zwischen der y-Koordinate $(y)$ der Position des Reflexionspunkts $(R_{1-2})$ und der ersten oder zweiten Entfernung $(r_1, r_2)$ des Reflexionspunktes $(R_{1-2})$ zu der Entfernungsmessvorrichtung kleiner als ein vorgegebener $\Delta r$-Schwellenwert ist.

6. Verfahren nach einem der vorangegangenen Ansprüche, **dadurch gekennzeichnet, dass** das erste und das zweite Wertepaar $(x1,r1)(x2,r2)$ paarweise aus einer Vielzahl von Wertepaaren $(xi,ri$ mit $i=1...I)$ ausgewählt werden, vorzugsweise nachdem diese Vielzahl von Wertepaaren $(xi,ri)$ zuvor geglättet wurde.

7. Verfahren nach Anspruch 6, **dadurch gekennzeichnet, dass** die paarweise Auswahl von Wertepaaren aus der Vielzahl von Wertepaaren und die darauf basierende Berechnung von jeweils einer Position $(x,y)$ eines Reflexionspunktes $(R_{1-2})$ für eine Vielzahl von unterschiedlich positionierten Reflexionspunkten $(R_{1-2})$ auf dem Hindernis (200) wiederholt wird.

8. Computerprogramm mit Programmcode für eine Entfernungsmessvorrichtung (100), insbesondere eine Ultraschall-Messvorrichtung, **dadurch gekennzeichnet, dass** das Computerprogramm ausgebildet ist zum Durchführen des Verfahrens nach einem der Ansprüche 1 bis 7.

**EP 1 695 025 B1**

9.  Datenträger **gekennzeichnet durch** das Computerprogramm nach Anspruch 8.

10. Entfernungsmessvorrichtung (100), wobei die Entfernungsmessvorrichtung (100) eine Ultraschall-Entfernungsmessvorrichtung ist, zum Bestimmen der Position (x,y) von mindestens einem Reflexionspunkt ($R_{1-2}$) auf der Oberfläche eines konvex geformten Hindernisses (200), umfassend:

eine Berechnungseinrichtung zum Berechnen einer ersten Entfernung ($r_1$) zwischen dem Reflexionspunkt und einer ersten Position ($x_1$) der Entfernungsmessvorrichtung (100) aus einer Zeitdauer zwischen einem Aussenden eines ersten Sendesignals von der Entfernungsmessvorrichtung (100) an der Position ($x_1$) auf das Hindernis und einem Empfang eines Empfangssignals als Teil des an dem Hindernis (200) reflektierten Sendesignals; **dadurch gekennzeichnet, daß**
die Berechnungseinrichtung ausgebildet ist, zum Berechnen einer zweiten Entfernung ($r_2$) des Reflexionspunktes in Bezug auf eine zweite nach Vorbeifahrt am Hindernis erreichten Position ($x_2$) der Entfernungsmessvorrichtung analog zu der Berechnung der ersten Entfernung und zum Berechnen der Position (x,y) des Reflexionspunktes ($R_{1-2}$) mit Hilfe des Verfahrens der Triangulation aus einem ersten Wertepaar ($x_1$, $r_1$), umfassend die erste Position ($x_1$) der Entfernungsmessvorrichtung (100) und die erste Entfernung ($r_1$), und einem zweiten Wertepaar ($x_2$, $r_2$), umfassend die zweite Position ($x_2$) der Entfernungsmessvorrichtung und die zweite Entfernung (r2), wobei der Abstand zwischen der ersten und der zweiten Position ($x_1$, $x_2$) kleiner ist als die Summe der ersten und der zweiten Entfernung ($r_1$, $r_2$).

## Claims

1.  Method for determination of the position (x, y) of at least one reflection point ($R_{1-2}$) on the surface of a convexly shaped obstruction (200) by means of a distance measurement apparatus (100) installed in the side area of a vehicle, the distance measurement apparatus (100) being an ultrasound distance measurement apparatus, comprising the following steps:

- calculation of a first distance ($r_1$) between the reflection point and a first position ($x_1$) of the distance measurement apparatus (100) from a time period between transmission of a first transmitted signal from the distance measurement apparatus at the position ($x_1$) to the obstruction and reception of a received signal as part of the transmitted signal reflected on the obstruction (200);
**characterized by**
- traveling past the obstacle to a second position ($x_2$) of the distance measurement apparatus (100),
- calculation of a second distance ($r_2$) of the reflection point with respect to the second position ($x_2$) of the distance measurement apparatus (100) analogously to the calculation of the first distance ($r_1$) ; and
- calculation of the position (x, y) of the reflection point ($R_{1-2}$) with the aid of the triangulation method from a first value pair ($x_1$, $r_1$), comprising the first position ($x_1$) of the distance measurement apparatus and the first distance ($r_1$) and a second value pair ($x_2$, $r_2$), comprising the second position ($x_2$) of the distance measurement apparatus and the second distance ($r_2$), the distance between the first and second positions ($x_1$, $x_2$) being less than the sum of the first and second distances ($r_1$, $r_2$).

2.  Method according to Claim 1, **characterized in that** the x coordinate (x) of the position of the reflection point ($R_{1-2}$) is calculated using the following equation (1) :

$$x = \frac{r_2^2 - r_1^2 - x_2^2 + x_1^2}{2 * (x_1 - x_2)} \qquad (1)$$

where

$x_1$ represents the first position of the distance measurement apparatus (100);
$x_2$ represents the second position of the distance measurement apparatus (100);
$r_1$ represents the first distance of the reflection point ($R_{1-2}$) ;
and
$r_2$ represents the second distance of the reflection point ($R_{1-2}$).

3. Method according to Claim 2, **characterized in that** the calculated x coordinate (x) of the position of the reflection point ($R_{1-2}$) is rejected if the magnitude of the difference between the x coordinate (x) of the position of the reflection point ($R_{1-2}$) and the x coordinate of the first or second position ($x_1$, $x_2$) of the distance measurement apparatus (100) is less than a predetermined $\Delta x$ threshold value.

4. Method according to one of the preceding claims, **characterized in that** the y coordinate (y) of the position of the reflection point is calculated using the following equation (2):

$$y = \sqrt{r_2^2 - (x - x_2)^2} \qquad\qquad (2)$$

where

x represents the x coordinate of the position of the reflection point ($R_{1-2}$);
$x_2$ represents the second position of the distance measurement apparatus;
and
$r_2$ represents the second distance of the reflection point.

5. Method according to Claim 4, **characterized in that** the calculated y coordinate (y) of the position of the reflection point ($R_{1-2}$) is rejected if the magnitude of the difference between the y coordinate (y) of the position of the reflection point ($R_{1-2}$) and the first or second distance ($r_1$, $r_2$) of the reflection point ($R_{1-2}$) to the distance measurement apparatus is less than a predetermined $\Delta r$ threshold value.

6. Method according to one of the preceding claims, **characterized in that** the first and the second value pair (x1, r1) (x2, r2) are selected in pairs from a large number of value pairs (xi, ri where i = 1...I), preferably once this large number of value pairs (xi, ri) has previously been smoothed.

7. Method according to Claim 6, **characterized in that** the selection of value pairs in pairs from the large number of value pairs and the calculation, based on this, of in each case one position (x, y) of a reflection point ($R_{1-2}$) is repeated for a large number of differently positioned reflection points ($R_{1-2}$) on the obstruction (200).

8. Computer program with a program code for a distance measurement apparatus (100), in particular an ultrasound measurement apparatus, **characterized in that** the computer program is designed to carry out Method according to one of Claims 1 to 7.

9. Data storage medium **characterized by** the computer program according to Claim 8.

10. Distance measurement apparatus (100), the distance measurement apparatus (100) being an ultrasound distance measurement apparatus, for determination of the position (x, y) of at least one reflection point ($R_{1-2}$) on the surface of a convexly shaped obstruction (200), comprising:

a calculation device for calculation of a first distance ($r_1$) between the reflection point and a first position ($x_1$) of the distance measurement apparatus (100) from a time period between transmission of a first transmitted signal from the distance measurement apparatus (100) at the position ($x_1$) to the obstruction and reception of a received signal as part of the transmitted signal reflected on the obstruction (200);
**characterized in that**
the calculation device is designed to calculate a second distance ($r_2$) of the reflection point with respect to a second position ($x_2$), reached after traveling past the obstacle, of the distance measurement apparatus analogously to the calculation of the first distance; and to calculate the position (x, y) of the reflection point ($R_{1-2}$) with the aid of the triangulation method from a first value pair ($x_1$, $r_1$), comprising the first position ($x_1$) of the distance measurement apparatus (100) and the first distance ($r_1$) and a second value pair ($x_2$, $r_2$), comprising the second position ($x_2$) of the distance measurement apparatus and the second distance ($r_2$), the distance between the first and second positions ($x_1$, $x_2$) being less than the sum of the first and second distances ($r_1$, $r_2$).

**Revendications**

1. Procédé pour déterminer la position (x, y) d'au moins un point de réflexion ($R_{1-2}$) sur la surface d'un obstacle de forme convexe (200) au moyen d'un dispositif de mesure de distance (100) installé dans la zone latérale d'un véhicule, dans lequel le dispositif de mesure de distance (100) est un dispositif de mesure de distance à ultrasons, comprenant les étapes consistant à :

   - calculer une première distance ($r_1$) entre le point de réflexion et une première position ($x_1$) du dispositif de mesure de distance (100) à partir d'un temps s'écoulant entre une émission d'un premier signal d'émission du dispositif de mesure de distance à la position ($x_1$) de l'obstacle et une réception d'un signal de réception en tant que partie du signal d'émission réfléchi par l'obstacle (200) ;
   **caractérisé par**
   - le passage devant l'obstacle à une seconde position ($x_2$) du dispositif de mesure de distance (100),
   - le calcul d'une seconde distance ($r_2$) du point de réflexion par rapport à la seconde position ($x_2$) du dispositif de mesure de distance (100) de manière analogue au calcul de la première distance ($r_1$) ; et
   - le calcul de la position (x, y) du point de réflexion ($R_{1-2}$) en utilisant la méthode de triangulation à partir d'une première paire de valeurs ($x_1$, $r_1$) comprenant la première position ($x_1$) du dispositif de mesure de distance et la première distance ($r_1$), et d'une seconde paire de valeurs ($x_2$, $r_2$) comprenant la seconde position ($x_2$) du dispositif de mesure de distance et la seconde distance ($r_2$), dans lequel la distance entre les première et seconde positions ($x_1$, $x_2$) est inférieure à la somme des première et seconde distances ($r_1$, $r_2$).

2. Procédé selon la revendication 1, **caractérisé en ce que** la coordonnée x (x) de la position du point de réflexion ($R_{1-2}$) est calculée selon l'équation (1) suivante :

$$x = \frac{r_2^2 - r_1^2 - x_2^2 + x_1^2}{2*(x_1 - x_2)} \qquad (1)$$

   dans laquelle

   $x_1$ représente la première position du dispositif de mesure de distance (100) ;
   $x_2$ représente la seconde position du dispositif de mesure de distance (100) ;
   $r_1$ représente la première distance du point de réflexion ($R_{1-2}$) ; et
   $r_2$ représente la seconde distance du point de réflexion ($R_{1-2}$).

3. Procédé selon la revendication 2, **caractérisé en ce que** la coordonnée x (x) calculée de la position du point de réflexion ($R_{1-2}$) est rejetée lorsque la valeur de la différence entre la coordonnée x (x) de la position du point de réflexion ($R_{1-2}$) et la coordonnée x de la première ou seconde position ($x_1$, $x_2$) du dispositif de mesure de distance (100) est inférieure à une valeur de seuil Δx prédéterminée.

4. Procédé selon l'une quelconque des revendications précédentes, **caractérisé en ce que** la coordonnée y (y) de la position du point de réflexion est calculée selon l'équation (2) suivante :

$$y = \sqrt{r_2^2 - (x - x_2)^2} \qquad (2)$$

   dans laquelle

   x représente la coordonnée x de la position du point de réflexion ($R_{1-2}$) ;
   $x_2$ représente la seconde position du dispositif de mesure de distance ; et
   $r_2$ représente la seconde distance du point de réflexion.

5. Procédé selon la revendication 4, **caractérisé en ce que** la coordonnée y (y) calculée de la position du point de

réflexion ($R_{1-2}$) est rejetée lorsque la valeur de la différence entre la coordonnée y (y) de la position du point de réflexion ($R_{1-2}$) et la première ou seconde distance ($r_1$, $r_2$) du point de réflexion ($R_{1-2}$) au dispositif de mesure de distance est inférieure à une valeur de seuil $\Delta r$ prédéterminée.

6. Procédé selon l'une quelconque des revendications précédentes, **caractérisé en ce que** les première et seconde paires de valeurs (x1, r1) (x2, r2) sont sélectionnées par paires à partir d'une pluralité de paires de valeurs (xi, ri avec i = 1 ... I), de préférence après que ladite pluralité de paires de valeurs (xi, ri) a été préalablement lissée.

7. Procédé selon la revendication 6, **caractérisé en ce que** la sélection par paires de paires de valeurs parmi la pluralité de paires de valeurs ainsi que le calcul basé sur celles-ci de chaque position (x, y) d'un point de réflexion ($R_{1-2}$) est répétée pour une pluralité de points de réflexion ($R_{1-2}$) positionnés de manière différente sur l'obstacle (200).

8. Programme d'ordinateur comportant un code de programme destiné à un dispositif de mesure de distance (100), notamment un dispositif de mesure par ultrasons, **caractérisé en ce que** le programme d'ordinateur est conçu pour mettre en oeuvre le procédé selon l'une quelconque des revendications 1 à 7.

9. Support de données **caractérisé par** le programme d'ordinateur selon revendication 8.

10. Dispositif de mesure de distance (100), dans lequel le dispositif de mesure de distance (100) est un dispositif de mesure de distance à ultrasons, pour la détermination de la position (x, y) d'au moins un point de réflexion ($R_{1-2}$) sur la surface d'un obstacle de forme convexe (200), comprenant :

un dispositif de calcul destiné à calculer une première distance ($r_1$) entre le point de réflexion et une première position ($x_1$) du dispositif de mesure de distance (100) à partir d'un temps s'écoulant entre une émission d'un premier signal d'émission du dispositif de mesure de distance (100) à la position ($x_1$) sur l'obstacle et une réception d'un signal de réception en tant que partie du signal d'émission réfléchi par l'obstacle (200) ;
**caractérisé en ce que**
le dispositif de calcul est conçu pour calculer une seconde distance ($r_2$) du point de réflexion par rapport à une seconde position ($x_2$) du dispositif de mesure de distance, atteinte après passage devant l'obstacle de manière analogue au calcul de la première distance et
pour calculer la position (x, y) du point de réflexion ($R_{1-2}$) en utilisant la méthode de triangulation à partir d'une première paire de valeurs ($x_1$, $r_1$) comprenant la première position ($x_1$) du dispositif de mesure de distance (100) et la première distance ($r_1$) et d'une seconde paire de valeurs ($x_2$, $r_2$) comprenant la seconde position ($x_2$) du dispositif de mesure de distance et la seconde distance ($r_2$), dans lequel la distance entre les première et seconde positions ($x_1$, $x_2$) est inférieure à la somme des première et seconde distances ($r_1$, $r_2$).

Fig. 1

Fig. 2

Fig. 3

13

EP 1 695 025 B1

Fig. 4a

Fig. 4b

Fig. 4c

14

Fig. 6a

Fig. 6b

**IN DER BESCHREIBUNG AUFGEFÜHRTE DOKUMENTE**

**In der Beschreibung aufgeführte Patentdokumente**

- EP 1361459 A1
- EP 0987563 A

- US 2003128153 A1